Europäisches Patentamt

European Patent Office

Office européen des brevets

(19)

(11) **EP 0 781 396 B1**

(12) **FASCICULE DE BREVET EUROPEEN**

(45) Date de publication et mention
de la délivrance du brevet:
**15.12.1999 Bulletin 1999/50**

(21) Numéro de dépôt: **95931245.5**

(22) Date de dépôt: **14.09.1995**

(51) Int Cl.⁶: **G01B 11/24**

(86) Numéro de dépôt international:
**PCT/FR95/01181**

(87) Numéro de publication internationale:
**WO 96/08691 (21.03.1996 Gazette 1996/13)**

(54) **PROCEDE DE CORRELATION DES MESURES TRIDIMENSIONNELLES REALISEES PAR DES SYSTEMES D'ACQUISITION D'IMAGES ET INSTALLATION POUR SA MISE EN OEUVRE**

VERFAHREN ZUR KORRELATION VON-DURCH BILDERFASSUNGSSYSTEMEN AUSGEFUHRTEN- DREIDIMENSIONALEN MESSUNGEN UND ANORDNUNG ZUR DURCHFUHRUNG DIESES VERFAHRENS

METHOD FOR THE CORRELATION OF THREE DIMENSIONAL MEASUREMENTS OBTAINED BY IMAGE CAPTURING UNITS AND SYSTEM FOR CARRYING OUT SAID METHOD

(84) Etats contractants désignés:
**AT BE CH DE DK ES FR GB IT LI LU NL SE**

(30) Priorité: **16.09.1994 FR 9411462**

(43) Date de publication de la demande:
**02.07.1997 Bulletin 1997/27**

(73) Titulaire: **ORTEN**
**69003 Lyon (FR)**

(72) Inventeurs:
• **SCIANDRA, Jacques**
**F-69003 Lyon (FR)**
• **DIVET, Michel**
**F-69007 Lyon (FR)**
• **ROLET, Guy**
**F-69004 Lyon (FR)**

(74) Mandataire: **Schmitt, John et al**
**Roosevelt Consultants,**
**109, rue Sully,**
**BP 6138**
**69466 Lyon Cédex 06 (FR)**

(56) Documents cités:
**EP-A- 0 363 542** **EP-A- 0 373 077**
**WO-A-89/09922** **WO-A-91/16598**
**DE-A- 4 037 273**

• **ATZ AUTOMOBILTECHNISCHE ZEITSCHRIFT, vol. 6, no. 91, 1989 STUTTGART DE, pages 341-347, BRUHN E.A. 'FOTOGRAMMETRISCHE VERMESSUNG VON kRAFTFAHRZEUGEN'**
• **PROCEEDINGS IEEE OF INT. CONFERENCE ON ROBOTICS AND AUTOMATION, 1988 PHILADELPHIA (US), pages 562-567, GREMBAN E.A. 'GEOMETRIC CAMERA CALIBRATION USING SYSTEMS OF LINEAR EQUATIONS' cité dans la demande**
• **OPTICAL ENGINEERING, vol. 33, no. 4, Avril 1994 BELLINGHAM US, pages 1349-1358, XP 000440066 P. COMMEAN E.A. 'GEOMETRIC DESIGN OF A MULTISENSOR STRUCTURED LIGHT RANGE DIGITIZER'**

## Description

### DOMAINE TECHNIQUE

La présente invention concerne le domaine technique de la mesure tridimensionnelle d'objets au sens général, réalisée à l'aide de systèmes optiques d'acquisition d'images, et elle vise plus précisément les méthodes de mesure reposant sur la technique de projection de franges et d'analyse de la déformation des franges sur l'objet.

L'invention trouve une application particulièrement avantageuse dans le domaine de la mesure des parties du corps humain, en vue d'obtenir la reproduction partielle ou complète des parties du corps mesurées.

Dans une application préférée mais non exclusive, l'objet de l'invention vise à mesurer, en trois dimensions, le tronc d'une personne afin d'assurer la fabrication automatisée de corsets orthopédiques.

### TECHNIQUE ANTERIEURE

Dans le domaine de la mesure à l'aide de systèmes d'acquisition d'images, tels que des caméras, il apparaît, dans de nombreuses applications, que l'angle de vue d'une caméra est insuffisante pour couvrir la surface de l'objet à acquérir. Pour résoudre ce problème, il est procédé à différentes prises de vues et à une corrélation des images entre elles.

Une première technique de corrélation des images est proposée par la demande de brevet **FR 88-15 483**. Cette technique consiste à fixer un repère sur l'objet et, lors des prises de vues, à déplacer relativement la caméra par rapport à l'objet. La mise en place d'un repère sur l'objet s'avère être en pratique une opération délicate à mener à bien, notamment lorsque l'objet constitue une partie d'une personne. Il est à noter que des erreurs de mesures peuvent être commises, notamment dans ce type d'application, en raison du remuement des personnes lors des prises de vues. De plus, le principe même de cette méthode impose que le repère soit constamment visible par la caméra, ce qui limite le champ de prise de vue. Cette technique interdit ainsi de reconstituer, notamment, un volume complet s'établissant sur 360°.

Pour remédier à l'inconvénient de positionnement d'un repère sur l'objet, il a été proposé une autre technique de corrélation des images consistant à utiliser plusieurs caméras dont les positions relatives les unes par rapport aux autres sont connues et prédéterminées. Cette méthode nécessite de procéder à des relevés dimensionnels qui s'avèrent longs, délicats et fastidieux à mener à bien. De plus, les supports des caméras doivent présenter une grande robustesse et rigidité pour conserver des mesures précises.

L'objet de l'invention vise donc à remédier aux inconvénients des techniques connues en proposant un procédé de corrélation des mesures tridimensionnelles données par au moins deux systèmes optiques d'acquisition d'images, offrant l'avantage de ne pas nécessiter la mise en oeuvre de repères sur l'objet et n'imposant pas de relevés dimensionnels entre lesdits systèmes.

### EXPOSE DE L'INVENTION

Pour atteindre cet objectif, le procédé de corrélation selon l'invention consiste, pour la phase de calibration :

- à réaliser une sphère étalon montée mobile en rotation autour d'un axe distinct de celui passant par le centre de la sphère,
- à déplacer, par rotations successives, la sphère étalon pour la placer dans au moins des première et deuxième positions de mesure visibles simultanément par les deux systèmes optiques d'acquisition d'images,
- à déplacer par rotation, la sphère étalon pour la placer dans au moins une position de mesure, visible par au moins le premier système optique d'acquisition d'images et différente des première et deuxième positions de mesure,
- à déplacer par rotation, la sphère étalon pour la placer dans au moins une position de mesure, visible par au moins le deuxième système optique d'acquisition d'images et différente des première et deuxième positions de mesure,
- à mesurer, pour chacune des positions de mesure, la calotte de la sphère étalon vue par chacun des systèmes optiques d'acquisition d'images,
- à déterminer, pour chacune des positions de mesure, le centre de la calotte de la sphère étalon vue par chacun des systèmes optiques d'acquisition d'images, afin de permettre d'exprimer le même référentiel dans un premier repère vu par le premier système optique d'acquisition d'images, et dans un deuxième repère vu par le deuxième système optique d'acquisition d'images,
- et à calculer la matrice de passage entre les premier et deuxième repères, afin d'assurer une corrélation des mesures entre les premier et deuxième systèmes optiques d'acquisition d'images.

Un tel procédé permet ainsi de calibrer au moins deux systèmes optiques d'acquisition d'images permettant de relier, dans un repère unique, les différentes surfaces mesurées par lesdits systèmes.

Un autre objet de l'invention vise à améliorer la reconstruction des surfaces observées en éliminant les effets d'ombres portés des reliefs de l'objet, dus à l'orientation d'éclairement.

Pour atteindre cet objectif, le procédé selon l'invention consiste :

- pour au moins un système optique d'acquisition d'images, à utiliser deux capteurs formés chacun par une caméra et un projecteur de franges,

- et à assurer une corrélation entre les deux capteurs par l'utilisation d'un plan délimitant une référence physique commune aux deux capteurs.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

## BREVE DESCRIPTION DES DESSINS

La **fig. 1** est une vue en coupe de dessus illustrant une installation de mise en oeuvre du procédé selon l'invention.

La **fig. 2** est une vue en coupe-élévation prise sensiblement selon les lignes x-x de la **fig. 1**.

Les **fig. 3A à 3D** sont des schémas de principe illustrant les phases caractéristiques du procédé conforme à l'invention.

La **fig. 4** est une vue en élévation analogue à la **fig. 2** montrant une installation permettant de mettre en oeuvre une caractéristique particulière du procédé conforme à l'invention.

Les **fig. 5A à 5C** sont des vues de mires présentant, chacune, des caractéristiques particulières de transmission et/ou de variation de pas et équipant des projecteurs de franges mis en oeuvre dans le cadre de l'invention.

## MEILLEURE MANIERE DE REALISER L'INVENTION

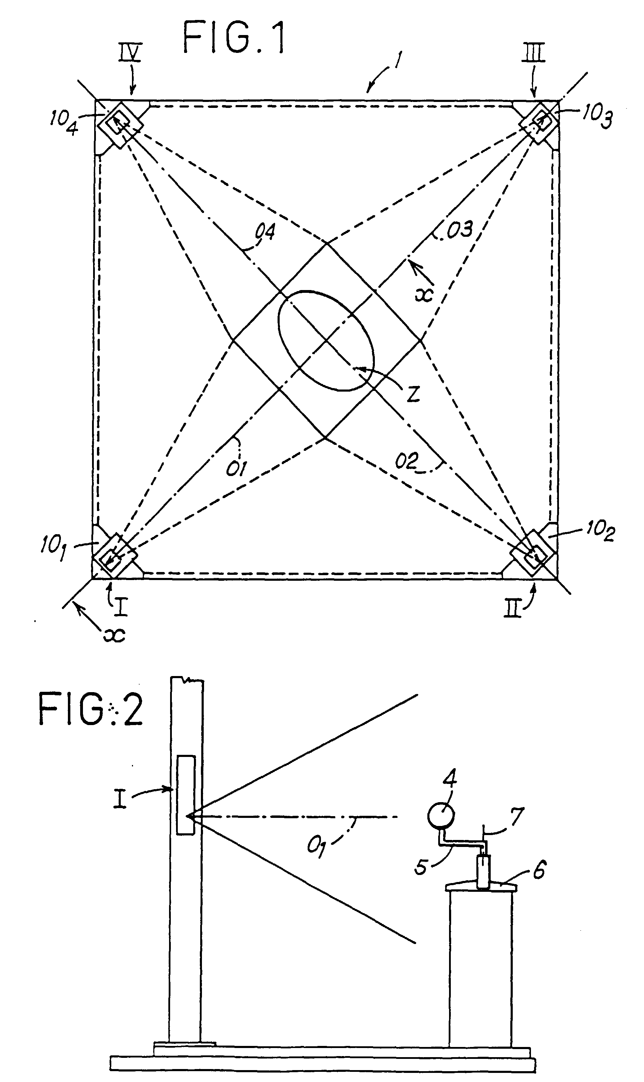

Tel que cela apparaît à la **fig. 1**, l'installation 1 est adaptée pour mesurer en trois dimensions, un objet au sens général, et notamment le tronc d'une personne, à l'aide d'au moins un premier **I** et un deuxième **II** systèmes optiques d'acquisition d'images. Il doit être compris que chaque système optique d'acquisition d'images a pour fonction de délivrer un ensemble de points représentatifs de l'objet maîtrisé dimensionnellement, dans un repère tridimensionnel lié au système optique d'acquisition d'images. Pour des raisons de simplification et de clarté, un système optique d'acquisition d'images est désigné dans la suite de la description par système d'acquisition. Dans l'exemple illustré, l'installation comporte quatre systèmes d'acquisition **I** à **IV** décalés deux à deux de 90°, de manière à assurer la mesure de l'objet sur toute sa périphérie. Chaque système d'acquisition **I** à **IV** mesure une portion différente de l'objet placé à l'intérieur d'une zone Z délimitée au voisinage de l'intersection des axes optiques $O_1$ à $O_4$ des systèmes d'acquisition **I** à **IV**. Les systèmes d'acquisition **I** à **IV** sont reliés à une unité de commande et de traitement non représentée. adaptée pour assurer la commande et l'acquisition des mesures et la mise en correspondance des images entre elles pour reconstituer l'objet.

L'objet de l'invention vise à proposer un procédé de calibration entre les différents systèmes d'acquisition **I** à **IV**, de manière à relier entre elles chacune des surfaces vues par un système d'acquisition. Pour faciliter la compréhension du procédé selon l'invention, la description qui suit décrit la mise en correspondance du premier **I** et du deuxième **II** systèmes d'acquisition. Bien entendu, la méthode est réalisée en répétant les différentes étapes pour chaque couple de systèmes d'acquisition voisins.

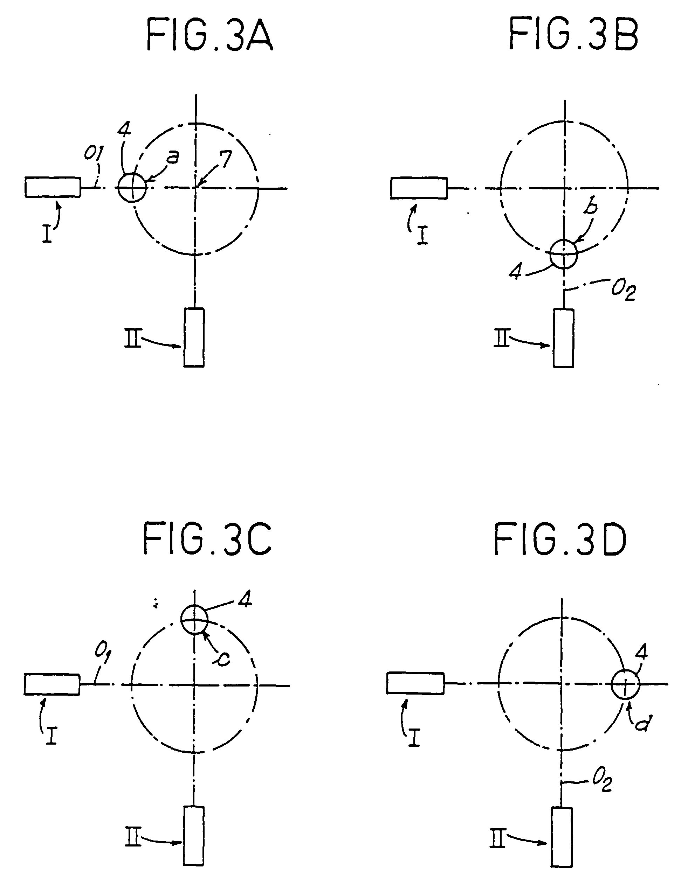

Pour la calibration des systèmes d'acquisition, le procédé consiste à utiliser, comme illustré à la **fig. 2**, une sphère étalon **4** portée par un bras **5** monté mobile sur un support **6**, selon un axe de rotation **7** qui est distinct de celui passant par le centre de la sphère étalon **4**. Tel que cela ressort plus précisément de la **fig. 3A**, la sphère étalon **4** est placée dans une première position $\underline{a}$ dans laquelle elle est visible simultanément par les systèmes d'acquisition **I** et **II**. Pour des raisons de simplification, la sphère étalon **4** est placée, en position $\underline{a}$, de façon à être sensiblement centrée sur l'axe optique $O_1$ du premier système d'acquisition **I**. Chaque système d'acquisition **I**, **II** mesure alors la calotte sphérique visible de la sphère **4**. Le procédé consiste, ensuite, à déterminer, par des techniques classiques de calcul, les centres $S^I{}_1$ et $S^{II}{}_0$, de la sphère étalon vue respectivement par les systèmes d'acquisition **I** et **II**.

Le procédé selon l'invention consiste à placer, par une rotation autour de l'axe **7**, la sphère étalon **4** dans une deuxième position de mesure $\underline{b}$ dans laquelle cette dernière se trouve visible simultanément par les deux systèmes d'acquisition **I**, **II** (**fig. 3B**). Pour des raisons de simplification, la sphère étalon **4**, en position $\underline{b}$, se trouve centrée sensiblement sur l'axe optique $O_2$ du système d'acquisition **II**. En position $\underline{b}$, les systèmes d'acquisition **I** et **II** mesurent la calotte sphérique visible de la sphère étalon **4**. Le procédé consiste ensuite à déterminer les centres $S^I{}_2$, $S^{II}{}_1$ de la sphère étalon, vue respectivement par les systèmes d'acquisition **I** et **II**.

Le procédé selon l'invention consiste également à déplacer, par rotation autour de l'axe **7**, la sphère étalon **4** pour la placer dans une troisième position $\underline{c}$, qui est visible au moins par le premier système d'acquisition **I** et différente des positions $\underline{a}$ et $\underline{b}$. Dans l'exemple illustré à la **fig. 3C**, la position $\underline{c}$ est symétrique à la position $\underline{b}$ par rapport à l'axe optique $O_1$ du premier système d'acquisition **I**. La calotte sphérique visible par le système d'acquisition **I** est mesurée et le centre $S^I{}_0$ de la sphère étalon **4**, vue par le système d'acquisition **I**, est calculé.

Tel que cela ressort de la **fig. 3D**, la sphère étalon **4** est placée dans une position $\underline{d}$ dans laquelle la sphère est visible au moins par le deuxième système d'acquisition **II** et différente des positions $\underline{a}$ et $\underline{b}$. Dans l'exemple illustré, le positionnement de la sphère **4** en position $\underline{d}$ correspond à une position sensiblement symétrique à la position $\underline{a}$, par rapport à l'axe optique $O_2$ du système d'acquisition **II**. La calotte sphérique de la sphère étalon **4**, vue par le deuxième système d'acquisition **II**, est alors mesurée. Le procédé consiste ensuite à déterminer le centre $S^{II}_2$ de la sphère étalon vue par le système d'acquisition **II**. Tel que cela ressort de la description ci-dessus, chaque système d'acquisition **I**, **II** a permis de déterminer trois points, respectivement $S^I_0$, $S^I_1$, $S^I_2$ et $S^{II}_0$, $S^{II}_1$, $S^{II}_2$ qui sont situés sur un même cercle dans l'espace et dans un même plan en raison du déplacement de la sphère **4**, par rotations successives, autour d'un axe décentré **7** fixe.

Le procédé consiste à calculer, par une méthode appropriée connue en soi, le centre $A^I$ du cercle passant par les points $S^I_0$, $S^I_1$, $S^I_2$. Le point $A^I$ est défini comme étant l'intersection de l'axe de rotation **7** de la sphère **4** et du plan décrit par le centre de la sphère.

A partir des points ci-dessus, il peut être déterminé un repère $R_I$ ($A^I$, $\vec{U^I}$, $\vec{V^I}$, $\vec{W^I}$) composé d'un point origine $A^I$ matérialisant le centre du repère, et d'une base $B^I$ formée de trois vecteurs unitaires $\vec{U^I}$, $\vec{V^I}$, $\vec{W^I}$ tels que :
$$\vec{U^I} = \overrightarrow{A^I\,S^I_1} \quad \vec{V^I} = \overrightarrow{A^I\,S^I_2} \text{ et } \vec{W^I} = \vec{U^I} \wedge \vec{V^I}.$$

De la même façon, le centre $A^{II}$ du cercle passant par les points $S^{II}_0$, $S^{II}_1$, $S^{II}_2$ peut être calculé. Il est ensuite déterminé un repère $R_{II}$ ($A^{II}$, $\vec{U^{II}}$, $\vec{V^{II}}$, $\vec{W^{II}}$) composé d'un point origine $A^{II}$ et d'une base $B^{II}$ formée de trois vecteurs unitaires $\vec{U^{II}}$, $\vec{V^{II}}$, $\vec{W^{II}}$ tels que :
$$\vec{U^{II}} = \overrightarrow{A^{II}\,S^{II}_0} \quad \vec{V^{II}} = \overrightarrow{A^{II}\,S^{II}_1} \text{ et } \vec{W^{II}} = \vec{U^{II}} \wedge \vec{V^{II}}.$$

La connaissance d'un système référentiel matérialisé par les diverses positions de la sphère étalon et exprimé dans deux repères $R_I$, $R_{II}$ distincts, permet de calculer mathématiquement la matrice de passage du premier repère vers le deuxième repère, et d'exprimer ainsi tout point mesuré dans le premier repère vers le deuxième et, vice versa. Cette matrice de passage permet d'exprimer, dans un repère unique, les mesures d'un objet réalisées par les systèmes d'acquisition **I**, **II**.

Tel que cela ressort de la description qui précède, le procédé selon l'invention comporte une phase de calibration des systèmes d'acquisition qui, une fois réalisée, autorise la mesure en relief des objets, sans nécessiter la mise en place de repères sur l'objet. La seule contrainte concerne le fait de placer l'objet à mesurer dans la zone **Z** délimitée par les champs de vision des systèmes d'acquisition. Par ailleurs, un tel procédé de calibration, qui permet de connaître avec précision les positions relatives des systèmes d'acquisition, ne nécessite pas de réaliser des relevés dimensionnels toujours difficiles à exécuter.

Bien entendu, la méthode de calibration peut être étendue à un nombre quelconque de couples de systèmes d'acquisition. Cette méthode de calibration présente également l'avantage de pouvoir déterminer relativement facilement un point matériel à partir d'une surface donnée, dans la mesure où il est utilisé une sphère étalon dont la surface visible, quel que soit l'angle sous lequel le système d'acquisition la regarde, est toujours une calotte sphérique associée à un seul point de l'espace, à savoir son centre. Le procédé selon l'invention présente, également, l'avantage d'éviter de déterminer un objet étalon, dans la mesure où il est possible de disposer simultanément de tous les points nécessaires à la calibration. De plus, cette méthode n'impose pas de connaître la position précise des points nécessaires à la calibration.

En pratique, le procédé de calibration selon l'invention est relativement simple à mener à bien. Pour une corrélation des systèmes d'acquisition **I**, **II**, il peut être envisagé de procéder de la manière suivante :

-    mise en place de la sphère **4** dans la position **c**, acquisition des mesures avec le premier système d'acquisition **I** et détermination du centre $S^I_0$ de la sphère par rapport au premier système d'acquisition **I**,

-    rotation de la sphère **4** d'un quart de tour dans un sens donné, par exemple anti-horaire, pour la placer en position **a**, acquisition des mesures avec les premier et deuxième systèmes d'acquisition **I**, **II** et détermination des centres $S^I_1$, $S^{II}_0$, vus respectivement par les systèmes d'acquisition **I**, **II**,

-    rotation de la sphère **4** d'un quart de tour dans le sens anti-horaire pour la placer en position **b**, acquisition des mesures avec les premier et deuxième systèmes d'acquisition **I**, **II** et détermination des centres $S^I_2$, $S^{II}_1$ vus respectivement par les systèmes d'acquisition **I**, **II**,

-    rotation de la sphère **4** d'un quart de tour dans le sens anti-horaire pour la placer en position **d**, acquisition des mesures avec le deuxième système d'acquisition **II** et détermination du centre $S^{II}_2$, vu par le deuxième système d'acquisition **II**.

Dans l'exemple qui précède, il a été prévu de choisir deux positions **c** et **d** distinctes de mesure, visibles chacune uniquement par l'un des systèmes d'acquisition. Bien entendu, il peut être envisagé, pour la position de mesure **c** visible par au moins le premier système d'acquisition, et pour la position de mesure **d** visible par au moins le deuxième système d'acquisition, de choisir une unique position de mesure visible simultanément par les deux systèmes d'acquisition. Dans cette hypothèse, il suffit de placer, pour exécuter la phase de corrélation, la sphère étalon **4** dans une troisième position prise entre les positions **a** et **b**.

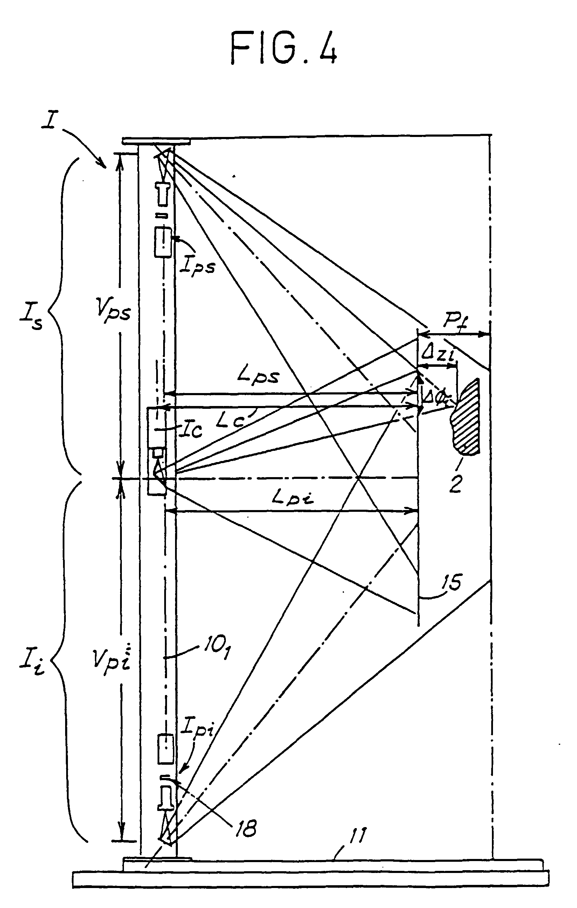

Il doit être considéré que chaque système d'acquisition **I** à **IV** peut être constitué par un capteur dont les images sont corrélées avec celles de la caméra voisine. Dans une forme de réalisation préférée mais non exclusive, l'un au moins, et par exemple chaque système d'acquisition **I** à **IV**, est formé, respectivement, de deux capteurs **Is-Ii** à **IVs-IVi** composés chacun d'une caméra et d'un projecteur générateur de franges issues d'une mire appropriée, appelé projecteur de franges dans la suite de la description. Dans un exemple préféré de réalisation, il est prévu d'utiliser une caméra commune pour les deux capteurs d'un même système d'acquisition. Ainsi, tel que cela ressort plus précisément de la **fig. 4**, chaque capteur **Is** à **IVs** est composé d'une caméra **Ic** à **IVc** et d'un projecteur de franges **Ips** à **IVps** dit supérieur, tandis que chaque capteur **Ii** à **IVi** est composé de la caméra **Ic** à **IVc** et d'un projecteur de franges **Ipi** à **IVpi** dit inférieur. Comme cela ressort clairement de la **fig. 4**, les projecteurs **Ips** et **Ipi** du système d'acquisition **I** sont fixés sur un montant ou une colonne **10₁** en étant disposés dans un plan de façon sensiblement symétrique par rapport à la caméra **Ic** qui est également fixée sur le support **10₁**. Chaque projecteur **Ips**, **Ipi** est distant de la caméra **Ic** d'une mesure donnée, respectivement **Vps**, **Vpi**. Les systèmes d'acquisition **II** à **IV** sont constitués de la même façon que le système d'acquisition **I** et sont montés chacun, respectivement, sur un montant **10₂** à **10₄**. L'installation **1** comporte ainsi quatre colonnes **10₁** à **10₄** reliées entre elles par des traverses haute et basse et un plancher **11** sur lequel l'objet **2** à mesurer est destiné à être disposé. L'installation de mesure **1** se présente sous la forme d'une structure unitaire rigide composée de quatre colonnes **10₁** à **10₄**, supportant chacune, rigidement, un système d'acquisition **I** à **IV** et solidarisées solidement entre elles.

Il doit être considéré que chaque couple caméra-projecteur **Is** à **IVs**, et **Ii** à **IVi** constitue un capteur autonome qui possède sa propre calibration et sa propre base mathématique de référence, dans laquelle les mesures sont exprimées. La détermination de ces bases mathématiques est obtenue, pour chaque couple caméra-projecteur, par la technique des deux plans parallèles qui est connue en soi et décrite, notamment, dans la publication de **GREMBAN K.D, THORPE C.E., KANADE T.**, *Geometric Camera Calibration Using System of Linear Equation, Proceedings IEEE of Int. Conference on Robotics and Automation, Philadephia, pp 947-951, (1988)*. Cette technique de calibration consiste à placer un panneau **15** qui délimite un plan de référence, à une distance **Lc** d'une caméra **Ic** à **IVc** et à des distances **Lps** et **Lpi** respectivement des projecteurs **Ips** à **IVps** et **Ipi** à **IVpi**. Pour mettre en correspondance les deux bases des capteurs appartenant à un même système d'acquisition, on définit conventionnellement un repère physique commun et identifiable par les deux couples caméra-projecteur par :

- un point origine défini comme étant l'intersection de l'axe optique de la caméra et le plan de référence,
- un vecteur $\vec{Z}$ parallèle à l'axe optique et dirigé vers la caméra,
- deux vecteurs orthogonaux $\vec{X}$ et $\vec{Y}$ situés dans le plan de référence, parallèles aux lignes et colonnes des cellules photosensibles de la caméra, les vecteurs $\vec{X}$, $\vec{Y}$, $\vec{Z}$ formant une base directe.

Pour permettre une mise en commun précise de deux bases formant ensemble chaque système d'acquisition **I-IV**, les plans de référence, dont l'un est associé à la calibration du couple **Ii-IVi** et dont l'autre est associé à la calibration du couple **Is-IVs**, doivent être soit confondus, soit parallèles et décalés d'une distance connue avec précision.

Pour une raison de simplification du modèle géométrique, l'axe de l'objectif de la caméra est placé perpendiculairement par rapport au plan de référence.

Le procédé consiste, pour le système d'acquisition **I**, à acquérir d'abord l'image formée sur le panneau **15** et constitué par les franges projetées par l'un des projecteurs, par exemple le projecteur **Ips**, et à acquérir l'image formée sur le panneau et constitué par les franges projetées par l'autre des projecteurs, par exemple le projecteur **Ipi**. Le procédé consiste, ensuite, à décaler le panneau **15** d'une mesure **Pf** par rapport au plan de référence. Le procédé consiste à acquérir d'abord l'image formée sur le panneau **15** et constitué par les franges projetées par l'un des projecteurs, par exemple **Ips**, et à acquérir ensuite l'image formée sur le panneau **15** et constituée par les franges projetées par l'autre des projecteurs, à savoir **Ipi**. Les opérations décrites ci-dessus sont renouvelées pour les systèmes d'acquisition **II** à **IV**.

Il est à noter que la mise au point de la caméra est réalisée de façon que le plan net le plus proche de la caméra soit le plan de référence, la profondeur de champ étant la mesure **Pf**. De même, la mise au point des objectifs des projecteurs est réalisée de façon que le plan net le plus proche de la caméra soit le plan de référence, la profondeur de champ étant la mesure **Pf**. La distance **Lc** entre la caméra et le plan de référence, ainsi que la distance **Pf** entre le plan de référence et le plan décalé, sont mesurées avec précision. De plus, les franges projetées sur le plan de référence sont parallèles aux lignes de cellules photosensibles de la caméra.

Par ailleurs, les mesures **Lpi**, **Lps**, **Vpi**, **Vps** sont extraites par la méthode des deux plans évoqués ci-dessus. La détermination des paramètres **Lp**, **Vp**, **Lc** et la connaissance des paramètres **Pccd** définissant les pas de pixels de la caméra, permettent de calibrer chaque capteur. En effet, l'altitude $\Delta Zi$ d'un point **Mi** quelconque de l'espace, par rapport au plan de référence, peut être modélisée par la fonction **F** du type :

$$\Delta Zi = F_{Lc,\ Lp,\ Vp,\ Pccd}\ (\Delta \Phi i).$$

La grandeur $\Delta \mathbf{Zi}$ est l'altitude du point **Mi** de l'objet **2** mesuré, c'est-à-dire la distance orthogonale du point **Mi** au plan de référence. La grandeur $\Delta \Phi i$ est le décalage vu par la caméra, de la frange en contact avec le point **Mi**. Ce décalage est défini au niveau du plan de référence, par rapport à la position de la même frange sur le plan de référence. Chaque frange projetée sur le plan de référence se trouve déphasée de $\Delta \Phi i$ sur l'image numérisée, lorsqu'elle atteint le plan décalé. A chaque déphasage $\Delta \Phi \mathbf{i}$ correspond une altitude $\Delta \mathbf{Zi}$ qui est constante, quel que soit le rayon **i** considéré, puisque le plan décalé est parallèle au plan de référence. A partir d'un ensemble important de couples ($\Delta \Phi i$, $\Delta Zi$), les paramètres **Lp**, **Vp** peuvent être optimisés par une méthode de calcul appropriée, appliquée à la fonction **F**.

La mise en oeuvre de deux capteurs pour chaque système d'acquisition permet d'améliorer la reconstruction des surfaces observées et d'éliminer les effets d'ombres portées des reliefs dus à l'orientation d'éclairement. L'utilisation d'une caméra commune pour deux capteurs permet de simplifier la mise en commun physique des repères des deux capteurs.

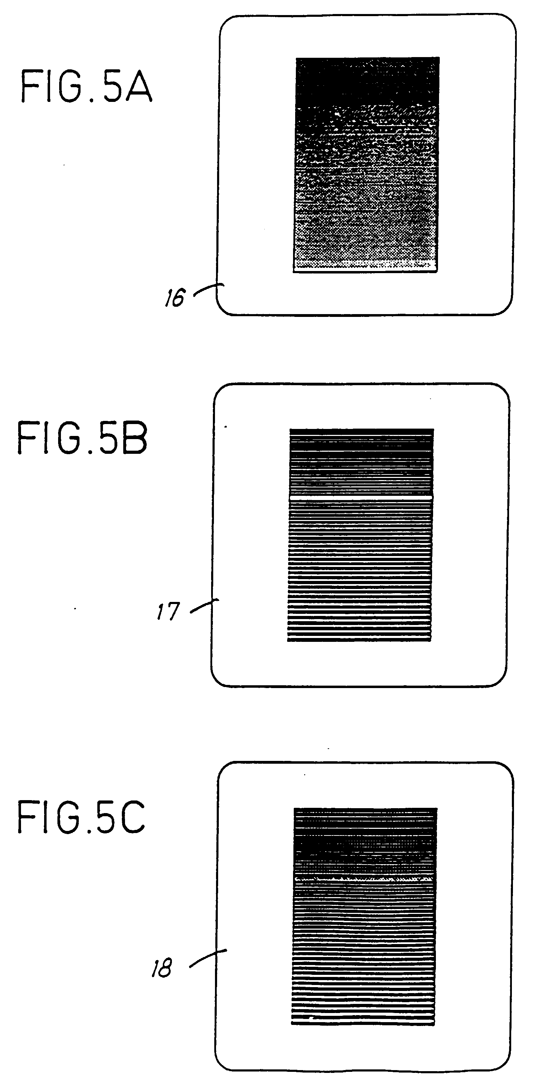

Dans l'exemple décrit ci-dessus, il est à noter que les projecteurs de franges **Ips** à **IVps** et **Ipi** à **IVpi** sont relativement inclinés par rapport à la normale au plan de référence. Il s'ensuit que l'éclairement lumineux varie considérablement d'un point à l'autre du plan de référence. Aussi, afin d'homogénéiser la variation d'éclairement sur l'objet due à l'inclinaison importante des projecteurs, il est prévu de réaliser, comme illustré à la **fig. 5A**, une mire **16** dont la transmission varie suivant une loi appropriée à la situation géométrique. De même, l'inclinaison du projecteur de franges provoque une variation du pas apparent de la mire. Afin de compenser la variation du pas projeté, il est prévu de réaliser, comme illustré à la **fig. 5B**, une mire **17** dont le pas suit une loi appropriée à la situation géométrique. Cette disposition permet d'homogénéiser la résolution du capteur dans le champ transversal. Selon une variante préférée de réalisation, chaque projecteur de franges est équipé d'une unique mire **18** (**fig. 4 et 5C**), regroupant les caractéristiques des mires **16**, **17**, c'est-à-dire présentant un pas variable et une transmission optique variable.

## POSSIBILITE D'APPLICATION INDUSTRIELLE

L'objet de l'invention trouve une application dans le domaine de la mesure par voie optique d'objets au sens général, en vue de leur reconstitution. Une application particulièrement avantageuse de l'invention concerne la mesure des parties du corps humain.

## Revendications

1. Procédé de corrélation des mesures tridimensionnelles réalisées par au moins un premier (**I**) et un deuxième (**II**) systèmes optiques d'acquisition d'images, caractérisé en ce qu'il consiste, pour la phase de calibration :

   - à réaliser une sphère étalon (**4**) montée mobile en rotation autour d'un axe (**7**) distinct de celui passant par le centre de la sphère,
   - à déplacer, par rotations successives, la sphère étalon (**4**) pour la placer dans au moins des première (**a**) et deuxième (**b**) positions de mesure visibles simultanément par les deux systèmes optiques d'acquisition d'images,
   - à déplacer par rotation, la sphère étalon pour la placer dans au moins une position de mesure (**c**), visible par au moins le premier système optique d'acquisition d'images (**I**) et différente des première et deuxième positions de mesure,
   - à déplacer par rotation, la sphère étalon pour la placer dans au moins une position de mesure (**d**), visible par au moins le deuxième système optique d'acquisition d'images (**II**) et différente des première et deuxième positions de mesure,
   - à mesurer, pour chacune des positions de mesure, la calotte de la sphère étalon vue par chacun des systèmes optiques d'acquisition d'images,
   - à déterminer, pour chacune des positions de mesure, le centre de la sphère étalon vue par chacun des systèmes optiques d'acquisition d'images, afin de permettre d'exprimer le même référentiel dans un premier repère vu par le premier système optique d'acquisition d'images, et dans un deuxième repère vu par le deuxième système optique d'acquisition d'images,
   - et à calculer la matrice de passage entre les premier et deuxième repères, afin d'assurer une corrélation des mesures entre les premier et deuxième systèmes optiques d'acquisition d'images.

2. Procédé selon la revendication 1, caractérisé en ce qu'il consiste, pour la position de mesure (**c**) visible par au moins le premier système optique d'acquisition d'images et pour la position de mesure (**d**) visible par au moins le deuxième système optique d'acquisition d'images, à choisir une unique position de mesure visible simultanément par les deux systèmes optiques d'acquisition d'images.

3. Procédé selon la revendication 1, caractérisé en ce qu'il consiste, pour la position de mesure (**c**) visible par au moins le premier système optique d'acquisition d'images et pour la position de mesure (**d**) visible par au moins le deuxième système optique d'acquisition d'images, à choisir deux positions distinctes de mesure visibles chacune par l'un des systèmes optiques d'acquisition d'images.

4. Procédé selon la revendication 3, caractérisé en ce qu'il consiste, pour les deux positions distinctes de mesure visibles chacune par l'un des systèmes optiques d'acquisition d'images, à placer la sphère étalon (**4**) dans une position sensiblement symétrique par rapport à l'axe optique du système considéré, à la position prise par la sphère étalon et visibles par les deux systèmes optiques d'acquisition d'images.

5. Procédé selon la revendication 1, caractérisé en ce qu'il consiste, pour les première (**a**) et deuxième (**b**) positions de mesure visibles simultanément par les deux systèmes optiques d'acquisition d'images, à placer la sphère étalon sensiblement dans l'axe optique, respectivement des premier (**I**) et deuxième (**II**) systèmes optiques d'acquisition d'images.

6. Procédé selon la revendication 1, caractérisé en ce qu'il consiste :

    - pour au moins un système optique d'acquisition d'images (**I à IV**), à utiliser deux capteurs (**Is-Ii à IVs-IVi**) formés chacun par une caméra (**Ic à IVc**) et un projecteur de franges (**Ips-Ipi à IVps-IVpi**),
    - et à assurer une corrélation entre les deux capteurs par l'utilisation d'un plan délimitant une référence physique commune aux deux capteurs.

7. Procédé selon la revendication 6, caractérisé en ce qu'il consiste à choisir une caméra commune (**Ic à IVc**) pour les deux capteurs.

8. Procédé selon la revendication 6, caractérisé en ce qu'il consiste, pour assurer la corrélation entre les deux capteurs par l'utilisation d'un plan délimitant une référence physique commune aux deux capteurs :

    - à placer un panneau (**15**) délimitant un plan de référence, à une distance (**Lc**) de la caméra et à des distances (**Lpi, Lps**) des projecteurs,
    - à acquérir l'image formée sur le panneau et constituée par les franges projetées par l'un des projecteurs,
    - à acquérir l'image formée sur le panneau et constituée par les franges projetées par l'autre des projecteurs,
    - à décaler le panneau d'une mesure (**Pf**) par rapport au plan de référence,
    - à acquérir l'image formée sur le panneau et constituée par les franges projetées par l'un des projecteurs,
    - à acquérir l'image formée sur le panneau et constituée par les franges projetées par l'autre des projecteurs,
    - et à déterminer les distances séparant le plan de référence de la caméra et des projecteurs, de manière à permettre d'assurer la corrélation entre les deux capteurs.

9. Procédé selon la revendication 6, caractérisé en ce qu'il consiste à équiper chaque projecteur de franges (**Ips** à **IVps**, et **Ipi** à **IVpi**) d'une mire (**16**) dont la transmission varie suivant une loi appropriée à la situation géométrique, afin d'homogénéiser la variation d'éclairement due à l'inclinaison du projecteur par rapport à la surface sur laquelle les franges sont projetées.

10. Procédé selon la revendication 6, caractérisé en ce qu'il consiste à équiper chaque projecteur de franges (**Ips** à **IVps**, et **Ipi** à **IVpi**) d'une mire (**17**) dont le pas suit une loi appropriée à la situation géométrique, afin de compenser la variation du pas projeté.

11. Procédé selon la revendication 6, caractérisé en ce qu'il consiste à équiper chaque projecteur de franges (**Ips** à **IVps**, et **Ipi** à **IVpi**) d'une mire (**18**) à pas variable et à transmission optique variable.

12. Installation pour assurer une corrélation des mesures tridimensionnelles réalisées par au moins un premier (**I**) et un deuxième (**II**) systèmes optiques d'acquisition d'images reliés entre eux par une unité de commande et de traitement, caractérisée en ce qu'elle comporte, pour assurer la phase de calibration conforme à la revendication 1, une sphère étalon (**4**) portée par un bras (**5**) monté libre en rotation sur un support (**6**), selon un axe (**7**) de rotation distinct de celui passant par le centre de la sphère.

13. Installation selon la revendication 12, caractérisée en ce qu'elle comprend, en tant que système optique d'acquisition d'images, une caméra (**Ic** à **IVc**) de part et d'autre de laquelle sont montés, d'une manière sensiblement symétrique et sur un support (**$10_1$-$10_4$**) formant colonne, deux projecteurs de franges (**Ips-Ipi** à **IVps-IVpi**).

14. Installation selon la revendication 13, caractérisée en ce que les supports (**$10_1$-$10_4$**) des systèmes optiques d'acquisition d'images sont solidarisés entre eux pour constituer une structure rigide de mesure.

**Patentansprüche**

1. Verfahren zur Korrelation der dreidimensionalen Messungen, die durch wenigstens ein erstes (I) und ein zweites (II) optisches Bildererfassungssystem vorgenommen werden, dadurch gekennzeichnet, daß es für die Eichungsphase darin besteht:

    - eine Eichmusterkugel (4) herzustellen, die so angebracht ist, daß sie eine Rotationsbewegung um eine Achse (7) ausführen kann, die von der durch den Mittelpunkt der Kugel verlaufenden Achse verschieden ist,
    - durch aufeinanderfolgende Drehungen die Eichmusterkugel (4) so zu verlagern, daß sie in wenigstens eine erste (a) und eine zweite (b) Meßposition gebracht wird, welche für die zwei optischen Bildererfassungssysteme gleichzeitig sichtbar sind,

- durch Drehung die Eichmusterkugel so zu verlagern, daß sie in wenigstens eine Meßposition (c) gebracht wird, welche für wenigstens das erste optische Bildererfassungssystem (I) sichtbar ist und von der ersten und zweiten Meßposition verschieden ist,

- durch Drehung die Eichmusterkugel so zu verlagern, daß sie in wenigstens eine Meßposition (d) gebracht wird, welche für wenigstens das zweite optische Bildererfassungssystem (II) sichtbar ist und von der ersten und zweiten Meßposition verschieden ist,

- für jede der Meßpositionen die Kalotte der Eichmusterkugel zu messen, die von jedem der optischen Bildererfassungssysteme gesehen wird,

- für jede der Meßpositionen den Mittelpunkt der Eichmusterkugel zu bestimmen, die von jedem der optischen Bildererfassungssysteme gesehen wird, um zu ermöglichen, dasselbe Bezugssystem in einem ersten Koordinatensystem, das von dem ersten optischen Bildererfassungssystem gesehen wird, und in einem zweiten Koordinatensystem, das von dem zweiten optischen Bildererfassungssystem gesehen wird, auszudrücken,

- und die Übergangsmatrix zwischen dem ersten und dem zweiten Koordinatensystem zu berechnen, um eine Korrelation der Messungen zwischen dem ersten und dem zweiten optischen Bildererfassungssystem sicherzustellen.

2. Verfahren nach Anspruch 1, dadurch gekennzeichnet, daß es darin besteht, für die Meßposition (c), die für wenigstens das erste optische Bildererfassungssystem sichtbar ist, und für die Meßposition (d), die für wenigstens das zweite optische Bildererfassungssystem sichtbar ist, eine einzige Meßposition zu wählen, die für die beiden optischen Bildererfassungssysteme gleichzeitig sichtbar ist.

3. Verfahren nach Anspruch 1, dadurch gekennzeichnet, daß es darin besteht, für die Meßposition (c), die für wenigstens das erste optische Bildererfassungssystem sichtbar ist, und für die Meßposition (d), die für wenigstens das zweite optische Bildererfassungssystem sichtbar ist, zwei verschiedene Meßpositionen zu wählen, die jeweils für eines der optischen Bildererfassungssysteme sichtbar sind.

4. Verfahren nach Anspruch 3, dadurch gekennzeichnet, daß es darin besteht, für die zwei verschiedenen Meßpositionen, die jeweils für eines der optischen Bildererfassungssysteme sichtbar sind, die Eichmusterkugel (4) in eine Position zu bringen, die bezüglich der optischen Achse des betrachteten Systems im wesentlichen symmetrisch zu der Position ist, die von der Eichmusterkugel eingenommen und für die beiden optischen Bildererfassungssysteme sichtbar ist.

5. Verfahren nach Anspruch 1, dadurch gekennzeichnet, daß es darin besteht, für die erste (a) und die zweite (b) Meßposition, die für die zwei optischen Bildererfassungssysteme gleichzeitig sichtbar sind, die Eichmusterkugel im wesentlichen in der optischen Achse des ersten (I) bzw. des zweiten (II) optischen Bildererfassungssystems anzuordnen.

6. Verfahren nach Anspruch 1, dadurch gekennzeichnet, daß es darin besteht:

- für wenigstens ein optisches Bildererfassungssystem (I bis IV) zwei Geber (Is-Ii bis IVs-IVi) zu verwenden, die jeweils aus einer Kamera (Ic bis IVc) und einem Streifenprojektor (Ips-Ipi bis IVps-IVpi) gebildet werden,

- und eine Korrelation zwischen den zwei Gebern durch die Verwendung einer Ebene zu gewährleisten, die ein physikalisches Bezugselement begrenzt, welches den beiden Gebern gemeinsam ist.

7. Verfahren nach Anspruch 6, dadurch gekennzeichnet, daß es darin besteht, eine gemeinsame Kamera (Ic bis IVc) für die zwei Geber zu wählen.

8. Verfahren nach Anspruch 6, dadurch gekennzeichnet, daß es darin besteht, zur Gewährleistung der Korrelation zwischen den zwei Gebern durch die Verwendung einer Ebene, die ein den beiden Gebern gemeinsames physikalisches Bezugselement begrenzt:

- eine Platte (15), die eine Bezugsebene begrenzt, in einer Entfernung (Lc) von der Kamera und in Entfernungen (Lpi, Lps) von den Projektoren anzuordnen,

- das auf der Platte gebildete und aus den von dem einen Projektor projizierten Streifen bestehende Bild zu erfassen,

- das auf der Platte gebildete und aus den von dem anderen Projektor projizierten Streifen bestehende Bild zu erfassen,

- die Platte um ein Maß (Pf) bezüglich der Bezugsebene zu verschieben,

- das auf der Platte gebildete und aus den von dem einen Projektor projizierten Streifen bestehende Bild zu erfassen,

- das auf der Platte gebildete und aus den von dem anderen Projektor projizierten Streifen bestehende Bild zu erfassen,

- und die Entfernungen zu bestimmen, welche die Bezugsebene von der Kamera und von den Projektoren trennen, so daß ermöglicht wird, die Korrelation zwischen den zwei Gebern sicherzustellen.

9. Verfahren nach Anspruch 6, dadurch gekennzeichnet, daß es darin besteht, jeden Streifenprojektor (Ips bis IVps und Ipi bis IVpi) mit einer Visiereinrichtung (16) auszustatten, deren Übertragung sich nach einem für die geometrische Anordnung passenden Gesetz ändert, um die Beleuchtungsänderung infolge der Neigung des Projektors bezüglich der Fläche, auf die die Streifen projiziert werden, zu homogenisieren.

10. Verfahren nach Anspruch 6, dadurch gekennzeichnet, daß es darin besteht, jeden Streifenprojektor (Ips bis IVps und Ipi bis IVpi) mit einer Visiereinrichtung (17) auszustatten, deren Teilung einem für die geometrische Anordnung passenden Gesetz folgt, um die Änderung der projizierten Teilung zu kompensieren.

11. Verfahren nach Anspruch 6, dadurch gekennzeichnet, daß es darin besteht, jeden Streifenprojektor (Ips bis IVps und Ipi bis IVpi) mit einer Visiereinrichtung (18) mit variabler Teilung und mit variabler optischer Übertragung auszustatten.

12. Anlage zur Sicherstellung einer Korrelation der dreidimensionalen Messungen, die durch wenigstens ein erstes (I) und ein zweites (II) optisches Bilderfassungssystem vorgenommen werden, welche untereinander durch eine Steuer- und Verarbeitungseinheit verbunden sind, dadurch gekennzeichnet, daß sie zur Gewährleistung der Eichungsphase nach Anspruch 1 eine Eichmusterkugel (4) umfaßt, die von einem Arm (5) getragen wird, der auf einer Halterung (6) frei drehbar um eine Drehachse (7) angebracht ist, die von der durch den Mittelpunkt der Kugel verlaufenden Achse verschieden ist.

13. Anlage nach Anspruch 12, dadurch gekennzeichnet, daß sie als optisches Bilderfassungssystem eine Kamera (Ic bis IVc) umfaßt, zu deren beiden Seiten auf eine im wesentlichen symmetrische Weise und auf einer eine Säule bildenden Halterung $(10_1$-$10_4)$ zwei Streifenprojektoren (Ips-Ipi bis IVps-IVpi) angebracht sind.

14. Anlage nach Anspruch 13, dadurch gekennzeichnet, daß die Halterungen $(10_1$-$10_4)$ der optischen Bilderfassungssysteme fest miteinander verbunden sind, so daß sie eine starre Meßkonstruktion bilden.

## Claims

1. Process for correlating the three-dimensional measurements made by at least a first (I) and a second (II) optical image capture system, characterized in that it consists, for the calibration phase:

   - in making a standard sphere (4) mounted rotatably about an axis (7) distinct from that passing through the centre of the sphere,
   - in displacing, by successive rotations, the standard sphere (4) so as to place it in at least first ($\underline{a}$) and second ($\underline{b}$) measurement positions visible simultaneously to both optical image capture systems,
   - in displacing the standard sphere by rotation so as to place it in at least one measurement position ($\underline{c}$) visible to at least the first optical image capture system (I) and different from the first and second measurement positions,
   - in displacing the standard sphere by rotation so as to place it in at least one measurement position ($\underline{d}$) visible to at least the second optical image capture system (II) and different from the first and second measurement positions,
   - in measuring, for each of the measurement positions, the cap of the standard sphere seen by each of the optical image capture systems,
   - in determining, for each of the measurement positions, the centre of the standard sphere seen by each of the optical image capture systems, so as to make it possible to express the same benchmark in a first reference frame seen by the first optical image capture system, and in a second reference frame seen by the second optical image capture system,
   - and in calculating the matrix for transferring between the first and second reference frames, so as to carry out a correlation of the measurements between the first and second optical image capture systems.

2. Process according to Claim 1, characterized in that it consists, for the measurement position ($\underline{c}$) visible to at least the first optical image capture system and for the measurement position ($\underline{d}$) visible to at least the second optical image capture system, in choosing a unique measurement position visible simultaneously to both optical image capture systems.

3. Process according to Claim 1, characterized in that it consists, for the measurement position ($\underline{c}$) visible to at least the first optical image capture system and for the measurement position ($\underline{d}$) visible to at least the second optical image capture system, in choosing two distinct measurement positions each visible to one of the optical image capture systems.

4. Process according to Claim 3, characterized in that it consists, for the two distinct measurement positions each visible to one of the optical image capture systems, in placing the standard sphere (4) in a substantially symmetric position with respect to the optical axis of the relevant system, at the position taken by the standard sphere and which are visible to both optical image capture systems.

5. Process according to Claim 1, characterized in that it consists, for the first (a) and second (b) measurement positions visible simultaneously to both optical image capture systems, in placing the standard sphere substantially on the optical axis, respectively of the first (I) and second (II) optical image capture systems.

6. Process according to Claim 1, characterized in that it consists:

   - for at least one optical image capture system (I to IV), in using two sensors (Is-Ii to IVs-IVi) each formed by a camera (Ic to IVc) and a fringe projector (Ips-Ipi to IVps-IVpi),
   - and in carrying out a correlation between the two sensors by using a plane delimiting a physical reference common to the two sensors.

7. Process according to Claim 6, characterized in that it consists in choosing a common camera (Ic to IVc) for the two sensors.

8. Process according to Claim 6, characterized in that it consists, in order to carry out the correlation between the two sensors by using a plane delimiting a physical reference common to the two sensors:

   - in placing a panel (15) delimiting a reference plane, at a distance (Lc) from the camera and at distances (Lpi, Lps) from the projectors,
   - in capturing the image formed on the panel and consisting of the fringes projected by one of the projectors,
   - in capturing the image formed on the panel and consisting of the fringes projected by the other projector,
   - in shifting the panel by a measurement (Pf) with respect to the reference plane,
   - in capturing the image formed on the panel and consisting of the fringes projected by one of the projectors,
   - in capturing the image formed on the panel and consisting of the fringes projected by the other projector,
   - and in determining the distances separating the reference plane of the camera and the projectors, in such a way as to make it possible to carry out the correlation between the two sensors.

9. Process according to Claim 6, characterized in that it consists in equipping each fringe projector (Ips to IVps and Ipi to IVpi) with a test pattern (16) whose transmission varies according to a law appropriate to the geometrical situation, so that the variation in illumination due to the inclination of the projector with respect to the surface onto which the fringes are projected is made uniform.

10. Process according to Claim 6, characterized in that it consists in equipping each fringe projector (Ips to IVps and Ipi to IVpi) with a test pattern (17) whose spacing follows a law appropriate to the geometrical situation, so as to compensate for the variation in the projected spacing.

11. Process according to Claim 6, characterized in that it consists in equipping each fringe projector (Ips to IVps and Ipi to IVpi) with a test pattern (18) with variable spacing and variable optical transmission.

12. Installation for carrying out a correlation of the three-dimensional measurements made by at least a first (I) and a second (II) optical image capture system which are linked together by a control and processing unit, characterized in that it comprises, in order to carry out the calibration phase in accordance with Claim 1, a standard sphere (4) carried by an arm (5) mounted free to rotate on a support (6), on an axis (7) of rotation distinct from that passing through the centre of the sphere.

13. Installation according to Claim 12, characterized in that it comprises, as optical image capture system, a camera (Ic to IVc) on either side of which are mounted, in a substantially symmetric manner and on a support ($10_1$-$10_4$) forming a column, two fringe projectors (Ips-Ipi to IVps-IVpi).

14. Installation according to Claim 13, characterized in that the supports ($10_1$-$10_4$) of the optical image capture systems are secured together to constitute a rigid measurement structure.

# FIG.1

# FIG.2

# FIG.3A

# FIG.3B

# FIG.3C

# FIG.3D

# FIG. 4

FIG.5A

16

FIG.5B

17

FIG.5C

18